# EUROPEAN PATENT APPLICATION

(11) **EP 4 545 822 A1**
(43) Date of publication of application: **30.04.2025**
(21) Application number: 24208371.5
(22) Date of filing: 23.10.2024
(51) Int. Cl.: F16H 61/16, F16H 63/42, F16H 59/44

(54) **STRADDLED VEHICLE**

(30) Priority: 23.10.2023 JP 2023182095
(71) Applicant: Yamaha Hatsudoki Kabushiki Kaisha, Iwata-shi, Shizuoka 438-8501 (JP)
(72) Inventor: EGUCHI, Kazuya, Iwata-shi, Shizuoka, 4388501 (JP)
(74) Representative: Zimmermann, Tankred Klaus

(57) **Abstract**

A straddled vehicle includes a bottom-neutral type transmission (13), a power source (11), a clutch (12, 52), a gear-shifting manipulation member (13a, 21), a shift direction indicator (15), and a control device (14), the shift direction indicator (15) including both an upward direction indicator (15U) and a downward direction indicator (15D), the shift direction indicator (15) being configured to display a recommended direction for a shift manipulation. When a transmission stage of the bottom-neutral type transmission (13) is the neutral (N), which is the bottommost stage, while traveling of the straddled vehicle is stopped; the control device (14) causes the upward direction indicator (15U) to display recommendation for the shift-up manipulation, and when the transmission stage of the bottom-neutral type transmission (13) is the first gear while traveling of the straddled vehicle is stopped; the control device (14) causes the upward direction indicator (15U) to display non-recommendation for the shift-up manipulation.

## Description

### Technical Field

The present teaching relates to a straddled vehicle.

### Background Art

For example, Patent Literature 1 (PTL 1) shows a straddled vehicle equipped with a transmission. In the transmission of PTL 1, each time a shift-up operation is performed, the transmission stage is switched to increase by one. Each time a shift-down operation is performed, the transmission stage is switched to decrease by one. The transmission of PTL 1 is a bottom-neutral type one. In the bottom-neutral type transmission, the transmission stage is switched from the first gear to the neutral gear by the shift-down operation. That is, in the bottom-neutral type transmission, the neutral gear is disposed not between the first and second gears, but at the bottommost position, which is lower than the first gear. The bottom-neutral type transmission can suppress a phenomenon in which upon a shift operation for switching from the first gear to the neutral gear, the transmission stage is switched beyond the neutral gear to the second gear, for example.

### Citation List

### Patent Literature

PTL 1: Japanese Patent Application Laid-Open No. 2015-117798

### Summary of Invention

### Technical Problem

The present teaching aims to suppress wear of a clutch in a straddled vehicle including a bottom-neutral type transmission.

If, for example, the bottom-neutral type transmission is in a neutral state before a start of the straddled vehicle, its gear stage switches to first gear in response to a shift-up operation carried out based on a shift-up manipulation. This is because the first gear is positioned higher than the neutral in the bottom-neutral type transmission.

If, for example, a rider performs the shift-up manipulation again, the gear stage may sometimes switch to second gear. This is because the second gear is positioned above the first gear, that is, positioned toward the same direction as the first gear is relative to the neutral in the bottom-neutral type transmission.

When the straddled vehicle starts in the second gear, a clutch is kept in a so-called half-clutch state for a longer period for the purpose of suppressing an engine stall, for example. This may consequently facilitate a rapid progress of clutch wear.

The inventor of the present application, as a result of studies, has discovered novel means for suppressing wear of the clutch peculiar to the bottom-neutral type transmission.

The inventor of the present application has discovered that a situation where a progress of the clutch wear is facilitated by switching the gear stage of the bottom-neutral type transmission to the second gear before a start is not attributable to the accuracy and the like of operations of the bottom-neutral type transmission, but is attributable to the rider's remembrance relating to the transmission stage. That is, there may be an event that the rider forgets that he/she has performed a shift-up manipulation on the bottom-neutral type transmission before a start and thus performs a shift-up manipulation again before a start, so that the gear stage switches to the second gear.

The inventor of the present application, as a result of studies, has come up with an idea that recommendation for the shift-up manipulation is displayed if the bottom-neutral type transmission is in the neutral while the vehicle is stopped, and non-recommendation for the shift-up manipulation is displayed if the transmission is switched to the first gear by the shift-up manipulation while the vehicle is stopped.

This can suppress an event that the rider performs another unnecessary shift-up manipulation before a start of the straddled vehicle, in a case where the state of the bottom-neutral type transmission switches from the neutral state to the first gear before the start. Thus, an event can also be suppressed that the clutch is kept in the half-clutch state for a long time under the second gear. Accordingly, the clutch wear can be suppressed.
The present teaching has been accomplished based on the knowledge described above.

To attain the aim described above, a straddled vehicle according to an aspect of the present teaching has the following configuration.
(1) A straddled vehicle including:
   a bottom-neutral type transmission having plural transmission stages including plural in-gear stages and neutral, the plural in-gear stages ranging from a low gear, which is first gear, to a top gear, which is the highest stage, the transmission stages being configured to be switched to increase by one gear upon one shift-up operation, and to be switched to decrease by one gear upon one shift-down operation, the transmission stages being configured such that the first gear is switched to the neutral by the shift-down operation;
   a power source that outputs power for driving the straddled vehicle;
   a clutch configured to connect or disconnect a power transmission path through which power outputted from the power source is supplied to the bottom-neutral type transmission;
   a gear-shifting manipulation member that receives a shift-up manipulation and a shift-down manipulation, the shift-up manipulation being associated with the shift-up operation in the bottom-neutral type transmission, the shift-down manipulation being associated with the shift-down operation in the bottom-neutral type transmission;
   a shift direction indicator for displaying a recommended direction of a shift manipulation, the shift direction indicator including both an upward direction indicator and a downward direction indicator, the upward direction indicator being configured to display recommendation or non-recommendation for the shift-up manipulation on the gear-shifting manipulation member, the downward direction indicator being configured to display recommendation or non-recommendation for the shift-down manipulation on the gear-shifting manipulation member; and
   a control device configured to cause the upward direction indicator to display recommendation for the shift-up manipulation when a transmission stage of the bottom-neutral type transmission is the neutral, which is the bottommost stage, while traveling of the straddled vehicle is stopped, and to cause the upward direction indicator to display non-recommendation for the shift-up manipulation when the transmission stage of the bottom-neutral type transmission is the first gear while traveling of the straddled vehicle is stopped.

The bottom-neutral type transmission in the straddled vehicle according to (1) has the plural transmission stages. The plural transmission stages include the plural in-gear stages and the neutral. The plural in-gear stages range from the low gear to the top gear. The low gear is the first gear. The top gear is the highest stage. In the bottom-neutral type transmission, the first gear is switched to the neutral by the shift-down operation. Thus, in the bottom-neutral type transmission, the neutral is the bottommost stage.

The clutch connects or disconnects the power transmission path. The power is outputted from the power source, and is supplied to the bottom-neutral type transmission. A so-called half-clutch state is provided between a connected state and a disconnected state of the clutch. The half-clutch state is a state in which power is partially transmitted to such a degree that the straddled vehicle can travel.

The gear-shifting manipulation member receives rider's shift-up manipulation and shift-down manipulation. The shift-up manipulation is a manipulation associated with the shift-up operation in the bottom-neutral type transmission. The shift-down manipulation is a manipulation associated with the shift-down operation in the bottom-neutral type transmission.

The shift direction indicator includes both the upward direction indicator and the downward direction indicator. The upward direction indicator displays recommendation or non-recommendation for the shift-up manipulation on the gear-shifting manipulation member. The downward direction indicator displays recommendation or non-recommendation for the shift-down manipulation on the gear-shifting manipulation member.

The control device controls an operation of the shift direction indicator.

When the transmission stage of the bottom-neutral type transmission is the neutral, which is the bottommost stage, while traveling of the straddled vehicle is stopped; the control device causes the upward direction indicator to display recommendation for the shift-up manipulation. When the transmission stage of the bottom-neutral type transmission is the first gear while traveling of the straddled vehicle is stopped; the control device causes the upward direction indicator to display non-recommendation for the shift-up manipulation.

In the straddled vehicle according to (1), for example, when the transmission stage of the bottom-neutral type transmission is the neutral, which is the bottommost stage, before a start of the straddled vehicle; the upward direction indicator displays recommendation for the shift-up manipulation. Then, when the state of the bottom-neutral type transmission is switched from the neutral, which is the bottommost stage, to the first gear in response to the shift-up manipulation received by the gear-shifting manipulation member before a start of the straddled vehicle; the upward direction indicator of the shift direction indicator displays non-recommendation for the shift-up manipulation. Thus, recommendation for the shift-up manipulation is displayed in a case of the neutral, and after switching to the first gear, non-recommendation for the shift-up manipulation is displayed. This suppresses an event that the rider makes another unnecessary shift-up manipulation before a start. Consequently, a start can be made with the bottom-neutral type transmission at the first gear. Accordingly, wear of the clutch can be suppressed as compared to when non-recommendation for the shift-up manipulation is not displayed, for example.

(2) The straddled vehicle according to (1), in which
the bottom-neutral type transmission includes a shift actuator for electrically switching the transmission stage, and
the control device operates the shift actuator in accordance with the shift-up manipulation or the shift-down manipulation on the gear-shifting manipulation member.

In the straddled vehicle according to (2), the transmission stage is electrically switched. In the straddled vehicle according to (2), an event that the rider makes another unnecessary shift-up manipulation before a start is suppressed. Thus, an event that another unnecessary shift-up operation is performed on the shift actuator before a start is suppressed. Consequently, wear of the clutch is suppressed.

(3) The straddled vehicle according to (2), in which
when the transmission stage of the bottom-neutral type transmission is switched from the neutral, which is the bottommost stage, to the first gear in response to the shift-up manipulation received by the gear-shifting manipulation member while traveling of the straddled vehicle is stopped; the control device causes the upward direction indicator to display non-recommendation for the shift-up manipulation, which is a manipulation in the same direction as a direction of the previous manipulation, and prohibits the shift actuator from operating in accordance with the shift-up manipulation on the gear-shifting manipulation member.

In the straddled vehicle according to (3), when the transmission stage is switched to the first gear while traveling is stopped, the shift actuator is prohibited from operating in accordance with the shift-up manipulation. Therefore, even if the rider makes another unnecessary shift-up manipulation before a start, the transmission stage is not switched to second gear. This can further increase the possibility of suppressing wear of the clutch.

Furthermore, when the operation is prohibited, the upward direction indicator displays non-recommendation for the shift-up manipulation. Thus, in a situation where the shift actuator does not operate in response to the shift-up manipulation, it is displayed that the reason for such a situation is because another unnecessary shift-up manipulation has been made before a start. Accordingly, in an event that the transmission does not operate, the rider can easily grasp the cause of the event via the displaying.

(4) The straddled vehicle according to (1) to (3), in which
when the transmission stage of the bottom-neutral type transmission is the neutral, which is the bottommost stage, while traveling of the straddled vehicle is stopped; the control device causes the downward direction indicator to display non-recommendation for the shift-down manipulation, and when the transmission stage of the bottom-neutral type transmission is switched from the neutral, which is the bottommost stage, to the first gear in response to the shift-up manipulation received by the gear-shifting manipulation member while traveling of the straddled vehicle is stopped; the control device causes the downward direction indicator to display recommendation for the shift-down manipulation.

In the straddled vehicle according to (4), when the transmission stage is the neutral, which is the bottommost stage, while traveling of the straddled vehicle is stopped; non-recommendation for the shift-down manipulation is displayed. If the transmission stage is switched to the first gear, the downward direction indicator displays recommendation for the shift-down manipulation. This suppresses an unproductive shift-down manipulation in a case where the transmission stage is the neutral, which is the bottommost stage of the bottom-neutral type transmission. In addition, in a case where the transmission stage is switched to the first gear, the rider can recognize that switching to the neutral by the shift-down manipulation is allowed. Accordingly, a manipulation direction peculiar to the bottom-neutral type transmission can be easily informed via the displaying.

(5) The straddled vehicle according to (1) to (4), in which
when the transmission stage of the bottom-neutral type transmission is the first gear while traveling of the straddled vehicle is stopped; the control device causes the upward direction indicator to display non-recommendation for the shift-up manipulation, and causes the downward direction indicator to display recommendation for the shift-down manipulation,
when the transmission stage of the bottom-neutral type transmission is the first gear while the clutch is in a half-clutch state, which is a state between a connected state and a disconnected state; the control device causes the upward direction indicator to display non-recommendation for the shift-up manipulation, and causes the downward direction indicator to display non-recommendation for the shift-down manipulation, and
when the transmission stage of the bottom-neutral type transmission is the first gear while the clutch is in the connected state; the control device causes the upward direction indicator to display recommendation for the shift-up manipulation, and causes the downward direction indicator to display non-recommendation for the shift-down manipulation.

In the straddled vehicle according to (5), while the transmission stage is kept at the first gear, and traveling is stopped; non-recommendation for the shift-up manipulation and recommendation for the shift-down manipulation are displayed. While the transmission stage is kept at the first gear, and the clutch is in the half-clutch state; non-recommendation for the shift-up manipulation and non-recommendation for the shift-down manipulation are displayed. While the transmission stage is kept at the first gear, and the clutch is in the connected state; recommendation for the shift-up manipulation and non-recommendation for the shift-down manipulation are displayed.

Thus, even while the transmission stage is kept at the first gear, the status of displaying recommendation/non-recommendation for shift-up and shift-down changes in the course of the straddled vehicle starting from the stopped state. Accordingly, in a straddled vehicle that has no clutch lever and thus involves no clutch manipulation by the rider, a state of connection of a driving force can be grasped by viewing a change of the display on the shift direction indicator.

(6) The straddled vehicle according to (1) to (5), in which
when the transmission stage of the bottom-neutral type transmission is the first gear while the straddled vehicle is in traveling,
if a traveling speed of the straddled vehicle is higher than a reference speed, the control device causes the upward direction indicator to display recommendation for the shift-up manipulation,
if the traveling speed of the straddled vehicle is lower than the reference speed, the control device causes the upward direction indicator to display non-recommendation for the shift-up manipulation, and
irrespective of a rotation speed of an output of the power source, the control device causes the downward direction indicator to display non-recommendation for the shift-down manipulation,
the reference speed being a traveling speed of the straddled vehicle at which the rotation speed of the output of the power source becomes an idling rotation speed when the bottom-neutral type transmission is at second gear.

In the straddled vehicle according to (6), when the transmission stage is the first gear while the straddled vehicle is in traveling; the downward direction indicator displays non-recommendation for the shift-down manipulation. This suppresses a transition to the neutral state caused by the shift-down manipulation. This also suppresses an event that the rotation speed of the power source falls below the idling rotation speed so that time is taken for acceleration as a result of the shift-up operation to the second gear performed when the speed of the straddled vehicle is lower than the reference speed.

(7) The straddled vehicle according to (2) to (6), in which
when the clutch is in the half-clutch state, the control device causes the upward direction indicator to display non-recommendation for the shift-up manipulation, and causes the downward direction indicator to display non-recommendation for the shift-down manipulation, and
the control device prohibits the shift actuator from operating in accordance with the shift-up manipulation on the gear-shifting manipulation member, and permits the shift actuator to operate in accordance with the shift-down manipulation on the gear-shifting manipulation member.

In the straddled vehicle according to (7), during a shift operation, in which the half-clutch state is created, non-recommendation for the shift-up manipulation and non-recommendation for the shift-down manipulation are displayed. In this state, the shift-up manipulation is prohibited, and the shift-down manipulation is permitted. Thus, another additional shift-up manipulation is prohibited during the shift operation. This suppresses complication of the shift operation. On the other hand, the shift-down manipulation is permitted. Thus, for example, consecutive shift-down operations in a short time are carried out. Accordingly, for example, shift-down over plural stages to cope with a sudden deceleration is allowed.

(8) The straddled vehicle according to (1) to (7), in which
the clutch includes a clutch actuator for electrically connecting or disconnecting the transmission path.

In the straddled vehicle according to (8), it is possible to complete the shift-up operation or the shift-down operation by a simple manipulation on a switch serving as the gear-shifting manipulation member, without any direct manipulation on the clutch. Thus, an event that the rider makes another unnecessary shift-up manipulation before a start is suppressed in a vehicle capable of performing the shift-up operation by a simple manipulation. Consequently, a start can be made with the bottom-neutral type transmission at the first gear. Accordingly, wear of the clutch is suppressed in the vehicle capable of performing the shift-up operation by a simple manipulation.

(9) The straddled vehicle according to (1) to (8), in which
the clutch is a centrifugal clutch configured to connect or disconnect the transmission path in accordance with a rotation speed of an output of the power source.

In the straddled vehicle according to (9), it is possible, with a simple structure having no clutch actuator, to complete the shift-up operation or the shift-down operation by a simple manipulation on a switch serving as the gear-shifting manipulation member, without any direct manipulation on the clutch. Thus, an event that the rider makes another unnecessary shift-up manipulation before a start is suppressed in a vehicle capable of performing the shift-up operation by a simple manipulation and with a simple structure. Consequently, a start can be made with the bottom-neutral type transmission at the first gear. Accordingly, wear of the clutch is suppressed in the vehicle capable of performing the shift-up operation by a simple manipulation.

The straddled vehicle refers to a vehicle of a type including a saddle on which a driver sits astride. The straddled vehicle includes a wheel. Examples of the straddled vehicle include a motorcycle. The straddled vehicle is not limited to the motorcycle, but may be, for example, a three-wheeled motor vehicle, an all-terrain vehicle (ATV), or the like. The three-wheeled motor vehicle may include two front wheels and one rear wheel, or may include one front wheel and two rear wheels. The straddled vehicle is, for example, a lean vehicle configured to be capable of making a turn in a leaning posture. The lean vehicle is configured to make a turn with a posture in which the lean vehicle leans toward the center of a curve. With this, the lean vehicle resists against a centrifugal force acting on the lean vehicle during a turn.

While the straddled vehicle is stopped, traveling of the straddled vehicle is stopped.

The bottom-neutral type transmission is of a sequential shift type. The bottom-neutral type transmission is switched such that its transmission stage increases by one stage each time one shift-up operation is performed. The bottom-neutral type transmission is switched such that its transmission stage decreases by one stage each time one shift-down operation is performed. The bottom-neutral type transmission is, for example, a manual type transmission in which a shift operation is driven with a manipulation force applied by a shift manipulation. The bottom-neutral type transmission is not particularly limited, and may be an electric type one in which a shift operation is driven by a shift actuator, for example. The shift actuator is an electric actuator, for example. The electric actuator is a motor, for example. The shift actuator is not particularly limited, and may be an electromagnetic solenoid. The shift actuator may be a combination of an electric motor, a hydraulic pump, and an electric actuator.

The bottom-neutral type transmission is a transmission of a type in which first gear is switched to neutral by a shift-down operation. That is, the neutral is disposed below the first gear. In other words, the first gear is disposed above the neutral. Here, up (above) is a direction in which the numeral indicating the transmission stage increases by a shift operation. In the bottom-neutral type transmission, therefore, by the shift-up operation, switching is sequentially made from the neutral to first gear, second gear, third gear, ..., and top gear in this order.

The first gear is the low gear. The top gear is the uppermost stage. The top gear is sixth gear, for example. The top gear is not particularly limited, and may be fifth gear or fourth gear, for example.

The bottom-neutral type transmission, for example, has sets of gears that correspond to transmission stages. The bottom-neutral type transmission is, for example, a constant-mesh type one in which the gears in each set are constantly meshed with each other. The bottom-neutral type transmission is, for example, a dog type one configured to output power that has been shifted by dog engagement.

The power source is an internal combustion engine, for example. The power source is not particularly limited, and may be an electric motor, for example.

The clutch has the connected state, the disconnected state, and the half-clutch state. The connected state is a state where the power transmission path is connected. The disconnected state is a state where the transmission path is disconnected. The half-clutch state is a state between the connected state and the disconnected state. The half-clutch state is neither the connected state nor the disconnected state. In the half-clutch state, power is partially transmitted. In the half-clutch state, a driving force is transmitted to such a degree that the straddled vehicle is allowed to start traveling while a brake of the straddled vehicle does not operate, for example. In the connected state, an input speed and an output speed of the clutch are equal. In the half-clutch state, the input speed and the output speed of the clutch are different. To be strict, in the disconnected state, too, power may be partially transmitted through friction of members. The magnitude of the power transmitted in the disconnected state is to such a degree that the straddled vehicle does not start traveling.

The gear-shifting manipulation member is, for example, a shift pedal configured to be manipulated with a rider's foot. The bottom-neutral type transmission switches the transmission stage by using a manipulation force received by the shift pedal as a driving force for a shift operation. The gear-shifting manipulation member is not particularly limited, and for example, may be a shift switch configured to be manipulated with a rider's hand, or may be a pedal-type shift switch configured to be manipulated with a rider's foot. In such a case, the bottom-neutral type transmission is electrical. The straddled vehicle may include both the shift switch and the pedal-type shift switch as the gear-shifting manipulation member.

The gear-shifting manipulation member receives the shift-up manipulation, which is associated with the shift-up operation, and the shift-down manipulation, which is associated with the shift-down operation.

The shift direction indicator is a device for visually indicating recommendation or non-recommendation for the shift-up manipulation, and recommendation or non-recommendation for the shift-down manipulation. The shift direction indicator includes both the upward direction indicator and the downward direction indicator. The upward direction indicator and the downward direction indicator are lamps, for example. For instance, the upward direction indicator is a lamp representing an up-arrow. The downward direction indicator is a lamp representing a down-arrow. Shapes of the upward direction indicator and the downward direction indicator are not particularly limited. For example, the upward direction indicator may be a triangular lamp situated with the apex of the triangle arranged upper and the base of the triangle arranged lower, and the downward direction indicator may be a triangular lamp situated with the apex of the triangle arranged lower and the base of the triangle arranged upper. For example, the indicator indicates recommendation and non-recommendation for a manipulation by turning on and turning off, respectively. How recommendation or non-recommendation is presented is not particularly limited, and it may be presented by blinking of the indicator, for example. The indicator is not limited to a lamp, and for example, it may be a mechanism that changes a display manner by changing the physical position of an indicator displayed in a display window.

The control device is, for example, a computer including a processor that sequentially executes a program, and a storage device that stores the program. A configuration of the control device is not particularly limited, and may be a logical circuit that executes a control logic such as a field programmable gate array (FPGA), for example.

The control device may also have a function for controlling a shift actuator of an electric transmission. A configuration of the control device is not particularly limited, and may be a device different from a device that controls a shift actuator, for example.

### Advantageous Effects of Invention

The present teaching can suppress wear of a clutch in a straddled vehicle including a bottom-neutral type transmission.

### Brief Description of Drawings

[FIG. 1] A diagram illustrating an outline of a straddled vehicle according to first embodiment of the present teaching
[FIG. 2] A flowchart illustrating an operation of a control device shown in FIG. 1
[FIG. 3] A diagram illustrating an outline of a straddled vehicle according to second embodiment of the present teaching
[FIG. 4] A flowchart illustrating an operation of a control device shown in FIG. 3
[FIG. 5] A chart showing a display mode of a shift direction indicator and a permission/prohibition status for a shift operation, in a straddled vehicle according to third embodiment of the present teaching
[FIG. 6] A flowchart illustrating an operation of a control device in the third embodiment
[FIG. 7] A chart showing a display mode of a shift direction indicator and a permission/prohibition status for a shift operation, in a straddled vehicle according to fourth embodiment of the present teaching
[FIG. 8] A flowchart illustrating an operation of a control device in the fourth embodiment
[FIG. 9] A side view showing an outline configuration of a straddled vehicle according to fifth embodiment of the present teaching

### Description of Embodiments

In the following, embodiments of the present teaching will be described with reference to the drawings.

### [First Embodiment]

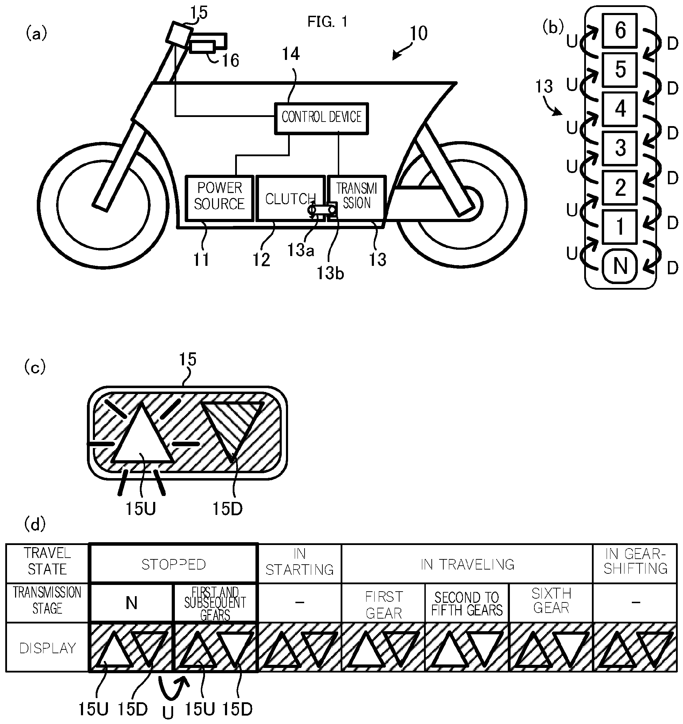

FIG. 1 is a diagram illustrating an outline of a straddled vehicle according to first embodiment of the present teaching. The part (a) of FIG. 1 is a side view showing an outline configuration of the straddled vehicle. The part (b) of FIG. 1 is a chart showing a configuration of a gear stage of a transmission. The part (c) of FIG. 1 shows an outline configuration of a shift direction indicator. The part (d) of FIG. 1 is a chart showing a display mode of the shift direction indicator.

A straddled vehicle 10 shown in the part (a) of FIG. 1 includes a power source 11, a clutch 12, a bottom-neutral type transmission 13, a gear-shifting manipulation member 13a, a shift direction indicator 15, and a control device 14. The straddled vehicle 10 is a motorcycle, for example.

The power source 11 outputs power for driving the straddled vehicle 10. The power source 11 is an engine, for example.

The clutch 12 connects or disconnects a power transmission path through which power outputted from the power source 11 is supplied to the bottom-neutral type transmission 13. The clutch 12 of this embodiment connects or disconnects the transmission path in response to a manipulation on a clutch lever 16.

The bottom-neutral type transmission 13 is a sequential type transmission. The bottom-neutral type transmission 13 is switched such that its transmission stage increases by one stage upon one shift-up operation U. The bottom-neutral type transmission 13 is switched such that its transmission stage decreases by one stage upon one shift-down operation D.

As shown in the part (b) of FIG. 1, the bottom-neutral type transmission 13 has plural transmission stages. The plural transmission stages of the bottom-neutral type transmission 13 include plural in-gear stages and neutral N. The plural in-gear stages range from a low gear, which is first gear, to a top gear, which is the highest stage. The highest stage of this embodiment is sixth gear, for example. The highest stage is not particularly limited, and may be fifth gear or fourth gear, for example.

The transmission stage (N, 1 to 6) is switched to increase by one gear upon one shift-up operation U, and is switched to decrease by one gear upon one shift-down operation D.

In an arrangement of the transmission stage herein, the direction from the neutral N to the top gear is upward direction. The direction from the top gear to the neutral N is downward direction.

The gear-shifting manipulation member 13a receives a shift-up manipulation or a shift-down manipulation from a rider. The shift-up manipulation is associated with the shift-up operation U of the bottom-neutral type transmission 13. The shift-down manipulation is associated with the shift-down operation D of the bottom-neutral type transmission 13.

The gear-shifting manipulation member 13a of this embodiment is a shift lever provided in the bottom-neutral type transmission 13. The bottom-neutral type transmission 13 of this embodiment switches the transmission stage by using a rider's manipulation force applied to the shift lever. Manipulating the shift lever as the gear-shifting manipulation member 13a in the upward direction is the shift-up manipulation. Manipulating the shift lever as the gear-shifting manipulation member 13a in the downward direction is the shift-down manipulation. The gear-shifting manipulation member 13a has a shifting manipulation sensor 13b. The shifting manipulation sensor 13b detects a manipulation on the gear-shifting manipulation member 13a.

The shift direction indicator 15 displays a recommended direction of a shift manipulation. The shift direction indicator 15 is disposed at such a position that the shift direction indicator 15 is visible to the rider riding on the straddled vehicle 10 in driving. The shift direction indicator 15 is attached to a handlebar or a vehicle body, for example. Alternatively, the shift direction indicator 15 may be located in any of the vehicle's meters, for example.

As shown in the part (c) of FIG. 1, the shift direction indicator 15 includes both an upward direction indicator 15U and a downward direction indicator 15D. The upward direction indicator 15U displays recommendation or non-recommendation for the shift-up manipulation. The downward direction indicator 15D displays recommendation or non-recommendation for the shift-down manipulation.

The upward direction indicator 15U is, for example, a lamp having a shape that represents the upward direction. The downward direction indicator 15D is, for example, a lamp having a shape that represents the downward direction. As shown in the part (c) of FIG. 1, the upward direction indicator 15U is, for example, in the shape of a triangle that symbolizes the upward direction. The downward direction indicator 15D is in the shape of a triangle that symbolizes the downward direction. The part (c) of FIG. 1 shows an example in which the upward direction indicator 15U is turned on while the downward direction indicator 15D is turned off.

In this embodiment, turn-on of the upward direction indicator 15U indicates recommendation for the shift-up manipulation. Turn-off of the upward direction indicator 15U indicates non-recommendation for the shift-up manipulation. Turn-on of the downward direction indicator 15D indicates recommendation for the shift-down manipulation. Turn-off of the downward direction indicator 15D indicates non-recommendation for the shift-down manipulation.

The form of the upward direction indicator 15U is not particularly limited, and examples thereof include an up-arrow, or a pictograph or a character representing the upward. The form of the downward direction indicator 15D is not particularly limited, and examples thereof include a down-arrow, or a pictograph or a character representing the downward. Examples of displaying by the upward direction indicator 15U and the downward direction indicator 15D include changing a lighting color, moving a lighting position, or displaying a moving image. The upward direction indicator 15U and the downward direction indicator 15D may have a mechanism for mechanical movement between a position at which a display board is visible through a window and a position at which the display board is hidden, for example. The shift direction indicator 15 may indicate information other than the upward direction indicator 15U and the downward direction indicator 15D. The shift direction indicator 15 may be arranged side-by-side with displaying of the type of a shift mode, for example.

The control device 14 of this embodiment also controls an output of the power source 11 in accordance with a manipulation on the gear-shifting manipulation member 13a. The control device 14 of this embodiment implements a function of a so-called quick shifter. More specifically, the control device 14 controls the output of the power source 11 in accordance with a travel state of the straddled vehicle 10 and a detection result from the shifting manipulation sensor 13b. The control device 14 controls the output by, for example, controlling an engine ignition timing or the amount of fuel supply, or by controlling power to be supplied to a motor.

In more detail, if the gear-shifting manipulation member 13a receives the shift-up manipulation while the straddled vehicle 10 is traveling, the control device 14 reduces the output of the power source 11, and then restores the output. The temporary reduction in the output of the power source 11 makes it easy to cancel the engagement in the transmission stage of the bottom-neutral type transmission 13. Consequently, in the bottom-neutral type transmission 13, the shift-up operation U can be easily performed with a manipulation force on the gear-shifting manipulation member 13a, and without a manipulation on the clutch lever 16.

If the gear-shifting manipulation member 13a receives the shift-down manipulation, the control device 14 increases the output of the power source 11, and then restores the output. The temporary increase in the output of the power source 11 makes it easy to cancel the engagement in the transmission stage of the bottom-neutral type transmission 13. Consequently, in the bottom-neutral type transmission 13, the shift-down operation can be easily performed with a manipulation force on the gear-shifting manipulation member 13a, and without a manipulation on the clutch lever 16.

The quick shifter function can be used in traveling. The shift-up operation for starting in a stopped state involves a manipulation on the clutch lever 16.

The control device 14 controls displaying on the shift direction indicator 15.

The control device 14 controls displaying on the upward direction indicator 15U and the downward direction indicator 15D. The control device 14 controls the displaying on the upward direction indicator 15U and the downward direction indicator 15D in accordance with a travel state of the straddled vehicle 10 and a state of the bottom-neutral type transmission 13.

As shown in the part (d) of FIG. 1, when the transmission stage of the bottom-neutral type transmission 13 is the neutral N, which is the bottommost stage, while traveling of the straddled vehicle 10 is stopped; the control device 14 causes the upward direction indicator 15U to display recommendation for a shift-up manipulation. When the transmission stage of the bottom-neutral type transmission 13 is the first gear while traveling of the straddled vehicle 10 is stopped; the control device 14 causes the upward direction indicator 15U to display non-recommendation for a shift-up manipulation.

More specifically, when the transmission stage of the bottom-neutral type transmission 13 is the neutral N, which is the bottommost stage, while traveling of the straddled vehicle 10 is stopped; the control device 14 causes the upward direction indicator 15U to display recommendation for a shift-up manipulation. When the transmission stage of the bottom-neutral type transmission 13 is switched from the neutral N, which is the bottommost stage, to the first gear in response to a shift-up manipulation received by the gear-shifting manipulation member 13a; the control device 14 causes the upward direction indicator 15U to display non-recommendation for a shift-up manipulation. This shift-up manipulation is a manipulation in the same direction as the direction of the previous manipulation. Thus, recommendation for a shift-up manipulation is displayed in a case of the neutral N, and after a shift-up operation, the displaying is changed to indicate non-recommendation for a shift-up manipulation.

For example, when the transmission stage of the bottom-neutral type transmission 13 is the neutral N, which is the bottommost stage, before a start of the straddled vehicle 10; the upward direction indicator 15U displays recommendation for a shift-up manipulation. Then, when the state of the bottom-neutral type transmission 13 is switched from the neutral N, which is the bottommost stage, to the first gear in response to a shift-up manipulation received by the gear-shifting manipulation member 13a before a start of the straddled vehicle 10, the upward direction indicator 15U of the shift direction indicator 15 displays non-recommendation for a shift-up manipulation. Thus, recommendation for a shift-up manipulation is displayed in a case of the neutral N, and after switching to the first gear, non-recommendation for the shift-up manipulation is displayed.

This suppresses an event that the rider makes another unnecessary shift-up manipulation before a start. For example, an event is suppressed that the rider forgets that he/she has performed a shift-up manipulation on the bottom-neutral type transmission 13 once before a start and thus performs a shift-up manipulation again before a start. Thus, an event is suppressed that the bottom-neutral type transmission 13 is brought into the second gear by another unnecessary shift-up manipulation. A start can be made with the bottom-neutral type transmission 13 at the first gear. Accordingly, wear of the clutch 12 can be suppressed as compared to when non-recommendation for a shift-up manipulation is not displayed, for example.

When the bottom-neutral type transmission 13 is at the neutral N while the straddled vehicle 10 is stopped; the control device 14 causes the downward direction indicator 15D to display non-recommendation for a shift-down manipulation. When the transmission stage of the bottom-neutral type transmission 13 is switched from the neutral N to the first gear in response to a shift-up manipulation received by the gear-shifting manipulation member 13a while the straddled vehicle 10 is stopped, the control device 14 causes the downward direction indicator 15D to display recommendation for a shift-down manipulation.

Thus, when the bottom-neutral type transmission 13 is at the neutral N while the straddled vehicle 10 is stopped, non-recommendation for a shift-down manipulation is displayed. If the transmission stage is switched to the first gear, recommendation for a shift-down manipulation is displayed. This suppresses an unproductive shift-down manipulation in a case where the transmission stage is the neutral N, which is the bottommost stage of the bottom-neutral type transmission 13. In addition, in a case where the transmission stage is switched to the first gear, the rider can recognize that switching to the neutral N by a shift-down manipulation is allowed. Accordingly, a manipulation direction peculiar to the bottom-neutral type transmission 13 can be easily informed via the displaying.

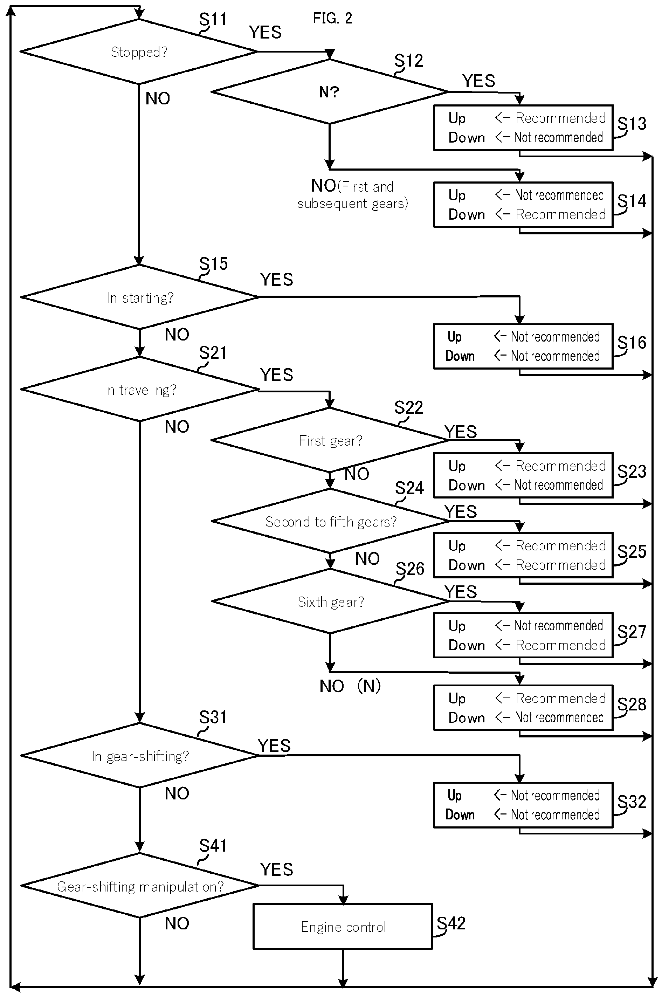

FIG. 2 is a flowchart illustrating an operation of the control device shown in FIG. 1. The operation of the control device 14 will be described with reference to the part (d) of FIG. 1 and FIG. 2.

The control device 14 executes a process shown in FIG. 2, to control displaying on the shift direction indicator 15.

The control device 14, for example, repeatedly executes the process shown in FIG. 2.

If the straddled vehicle 10 is stopped (S11: Yes), and the bottom-neutral type transmission 13 is at the neutral N (S12: Yes); the control device 14 causes the upward direction indicator 15U to display recommendation for a shift-up manipulation, and causes the downward direction indicator 15D to display non-recommendation for a shift-down manipulation (S13).

If the straddled vehicle 10 is stopped (S11: Yes), and the bottom-neutral type transmission 13 is not at the neutral N (S12: No); the control device 14 causes the upward direction indicator 15U to display non-recommendation for a shift-up manipulation, and causes the downward direction indicator 15D to display recommendation for a shift-down manipulation (S14).

Accordingly, as shown in the part (d) of FIG. 1, when the transmission stage of the bottom-neutral type transmission 13 is the neutral N, which is the bottommost stage, while the straddled vehicle 10 is stopped; the upward direction indicator 15U displays recommendation for a shift-up manipulation. When the transmission stage of the bottom-neutral type transmission 13 is switched from the neutral N, which is the bottommost stage, to the first gear in response to a shift-up manipulation received by the gear-shifting manipulation member 13a; the upward direction indicator 15U displays non-recommendation for a shift-up manipulation. That is, after a shift-up operation, displaying is changed to indicate non-recommendation for a shift-up manipulation.

If the straddled vehicle 10 is in starting (S15: Yes), the control device 14 causes the upward direction indicator 15U to display non-recommendation for a shift-up manipulation, and causes the downward direction indicator 15D to display non-recommendation for a shift-down manipulation (S16). In starting, the clutch 12 is in a half-clutch state, which is a state between a disconnected state and a connected state. In starting, the clutch 12, which has changed out of the disconnected state, is in a state of partially transmitting power from the power source 11 to the bottom-neutral type transmission 13. In starting, the clutch 12, which has changed out of the disconnected state, is in a state of not yet reaching the connected state. The control device 14 can detect the in-starting state based on the relationship of an output rotation speed of the power source 11, a traveling speed of the straddled vehicle 10, and the transmission, for example.

If the vehicle is in starting, non-recommendation for a shift-up manipulation and non-recommendation for a shift-down manipulation are displayed, so that a shift manipulation in starting is suppressed.

If the straddled vehicle 10 is in traveling (S21: Yes), and the bottom-neutral type transmission 13 is at the first gear (S22: Yes); the control device 14 causes the upward direction indicator 15U to display recommendation for a shift-up manipulation, and causes the downward direction indicator 15D to display non-recommendation for a shift-down manipulation (S23). In traveling, the clutch 12 is in the connected state.

As shown in the part (d) of FIG. 1, if the vehicle is stopped, non-recommendation for a shift-up manipulation and recommendation for a shift-down manipulation are displayed; if the vehicle is in starting, which is when the clutch 12 is in the half-clutch state, non-recommendation for a shift-up manipulation and non-recommendation for a shift-down manipulation are displayed; and if the vehicle is in traveling, which is when the clutch 12 is in the connected state, recommendation for a shift-up manipulation and non-recommendation for a shift-down manipulation are displayed.

If the straddled vehicle 10 is in traveling (S21: Yes), and the bottom-neutral type transmission 13 is at any of the second to fifth gears (S24: Yes); the control device 14 causes the upward direction indicator 15U to display recommendation for a shift-up manipulation, and causes the downward direction indicator 15D to display recommendation for a shift-down manipulation (S25). In traveling, a shift manipulation toward any transmission stage except the neutral N is recommended.

If the straddled vehicle 10 is in traveling (S21: Yes), and the bottom-neutral type transmission 13 is at the sixth gear (S26: Yes); the control device 14 causes the upward direction indicator 15U to display non-recommendation for a shift-up manipulation, and causes the downward direction indicator 15D to display recommendation for a shift-down manipulation (S27). This suppresses an unnecessary shift-up manipulation when at the top gear.

If the straddled vehicle 10 is in traveling (S21: Yes), and the bottom-neutral type transmission 13 is at the neutral N (S26: No); the control device 14 causes the upward direction indicator 15U to display recommendation for a shift-up manipulation, and causes the downward direction indicator 15D to display non-recommendation for a shift-down manipulation (S28). There is little chance that the bottom-neutral type transmission 13 will come to the neutral N in traveling, but in the event that the bottom-neutral type transmission 13 is forced to the neutral N, an unnecessary shift-down manipulation is suppressed.

If the straddled vehicle 10 is in gear-shifting (S31: Yes), the control device 14 causes the upward direction indicator 15U to display non-recommendation for a shift-up manipulation, and causes the downward direction indicator 15D to display non-recommendation for a shift-down manipulation (S32). In this embodiment, being in gear-shifting refers to being in a period in which the gear-shifting manipulation member 13a is being manipulated. More specifically, being in gear-shifting is being in a period in which a manipulation on the gear-shifting manipulation member 13a is being detected in accordance with a detection result from the shifting manipulation sensor 13b. In gear-shifting, the control device 14 controls an output of the power source 11 for the purpose of a shift operation.

As shown in the part (d) of FIG. 1, in gear-shifting, non-recommendation for a shift-up manipulation and non-recommendation for a shift-down manipulation are displayed. Accordingly, a shift manipulation in gear-shifting is suppressed.

Upon detection of a gear-shifting manipulation, namely, a shift-up manipulation or a shift-down manipulation, the control device 14 carries out a gear-shifting engine-control operation (S41,42). Actual shift-up and shift-down operations of this embodiment are implemented with use of a manipulation force on the gear-shifting manipulation member 13a. The control device 14 of this embodiment also controls an output of the power source 11 in the gear-shifting engine-control operation (S42). Accordingly, the gear-shifting of the bottom-neutral type transmission 13 can be performed without any manipulation on the clutch lever 16.

### [Second Embodiment]

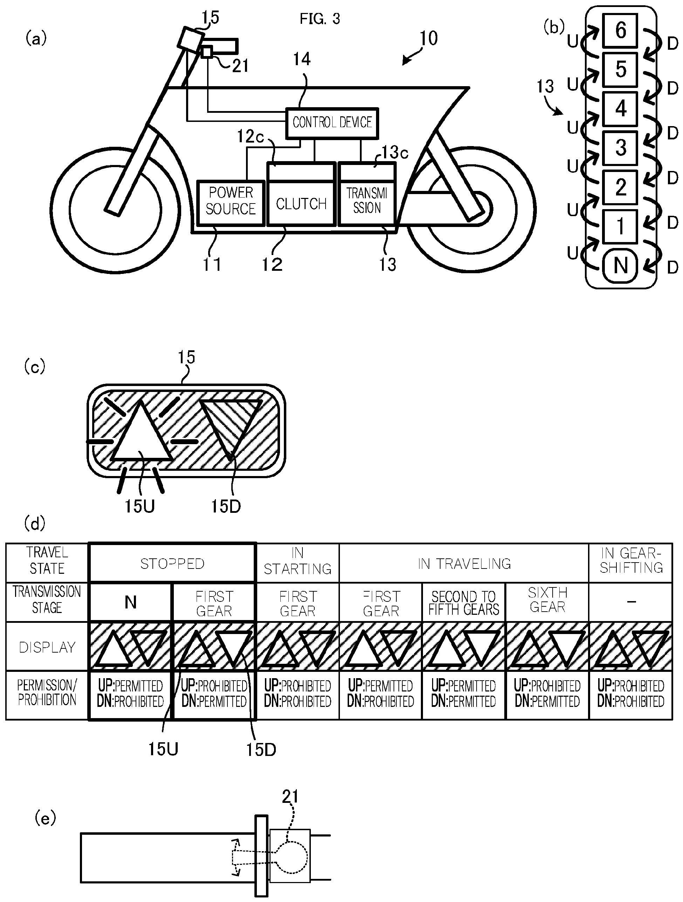

FIG. 3 is a diagram illustrating an outline of a straddled vehicle according to second embodiment of the present teaching.

A straddled vehicle 10 shown in FIG. 3 is an electric-transmission type vehicle. The straddled vehicle 10 includes a gear-shifting manipulation member 21, a shift actuator 13c, and a clutch actuator 12c. A control device 14 controls the shift actuator 13c and the clutch actuator 12c. The control device 14 not only controls displaying on a shift direction indicator 15 but also sets permission and prohibition of switching of a transmission stage of a bottom-neutral type transmission 13.

The shift actuator 13c electrically switches the transmission stage of the bottom-neutral type transmission 13. The bottom-neutral type transmission 13 operates electrically.

The straddled vehicle 10 includes a shift switch as the gear-shifting manipulation member 21, instead of a shift pedal as the gear-shifting manipulation member 13a shown in FIG. 1. The gear-shifting manipulation member 21 is a lever-type switch to be manipulated with a rider's hand, as shown in the part (e) of FIG. 3 for example. The gear-shifting manipulation member 21 receives a shift-up manipulation or a shift-down manipulation in accordance with a direction in which the gear-shifting manipulation member 21 is manipulated. A configuration of the gear-shifting manipulation member 21 is not particularly limited, and it may be a push-button type switch or a pedal type switch to be manipulated with a foot, for example.

The straddled vehicle 10 includes the clutch actuator 12c, and does not include a clutch lever. The straddled vehicle 10 has a clutch 12 configured to operate with a driving force outputted by the clutch actuator 12c. The clutch 12 operates electrically.

These are main points different from the first embodiment. In the following, points different from the first embodiment will primarily be described, and elements common to the first embodiment will be given the same reference signs, and descriptions thereof will be omitted.

The control device 14 controls the shift actuator 13c and the clutch actuator 12c in accordance with a manipulation on the gear-shifting manipulation member 21.

The control device 14, for example, in response to a manipulation on the gear-shifting manipulation member 21, causes the clutch actuator 12c to change the clutch 12 from a connected state to a disconnected state or to a half-clutch state, then causes the shift actuator 13c to switch the transmission stage of the bottom-neutral type transmission 13, and then causes the clutch actuator 12c to change the clutch 12 to the connected state. When the bottom-neutral type transmission 13 is at the first gear while the straddled vehicle 10 is stopped; the clutch 12 is changed from the disconnected state to the half-clutch state or to the connected state in accordance with an acceleration manipulation.

The part (d) of FIG. 3 is a chart showing a display mode of the shift direction indicator 15, and a setting status of permission and prohibition of switching of the transmission stage according to this embodiment. Display contents on the shift direction indicator 15 are identical to those of the first embodiment shown in the part (d) of FIG. 1.

In this embodiment, when non-recommendation for a shift-up manipulation is displayed, a shift-up operation is prohibited. When, on the other hand, recommendation for a shift-up manipulation is displayed, a shift-up operation is permitted. When non-recommendation for a shift-down manipulation is displayed, a shift-down operation is prohibited. When, on the other hand, recommendation for a shift-down manipulation is displayed, a shift-down operation is permitted.

For example, when the transmission stage of the bottom-neutral type transmission 13 is the first gear while the straddled vehicle 10 is stopped; the control device 14 causes an upward direction indicator 15U to display non-recommendation for a shift-up manipulation, and prohibits a shift-up operation in accordance with a shift-up manipulation ("UP: Prohibited"). That is, operations of the shift actuator 13c and the clutch actuator 12c are prohibited. In this case, the bottom-neutral type transmission 13 does not perform a shift-up operation even if a shift-up manipulation is made. In this case, the control device 14 causes a downward direction indicator 15D to display recommendation for a shift-down manipulation, and permits an operation in accordance with a shift-down manipulation ("DN: Permitted"). In this case, the bottom-neutral type transmission 13 performs a shift-down operation if a shift-down manipulation is made.

In the straddled vehicle 10 according to this embodiment, when the transmission stage is switched from the neutral N to the first gear while the straddled vehicle 10 is stopped; the shift actuator 13c and the clutch actuator 12c are prohibited from operating in accordance with a shift-up manipulation. Therefore, even if a rider makes another unnecessary shift-up manipulation before a start, the transmission stage is not switched to the second gear. This can further increase the possibility of suppressing wear of the clutch 12.

Furthermore, when the operations are prohibited, the upward direction indicator 15U displays non-recommendation for a shift-up manipulation. Thus, in a situation where the shift actuator 13c and the clutch actuator 12c do not operate in response to a shift-up manipulation, it is displayed that the reason for such a situation is because another unnecessary shift-up manipulation has been made before a start. Accordingly, in an event that the bottom-neutral type transmission 13 does not operate in accordance with a shift manipulation, the rider can easily grasp the cause of the event via the displaying.

When the bottom-neutral type transmission 13 is at the neutral N while the straddled vehicle 10 is stopped; the control device 14 causes the downward direction indicator 15D to display non-recommendation for a shift-down manipulation. When the transmission stage of the bottom-neutral type transmission 13 is switched from the neutral N to the first gear in response to a shift-up manipulation received by the gear-shifting manipulation member 21 while the straddled vehicle 10 is stopped; the control device 14 causes the downward direction indicator 15D to display recommendation for a shift-down manipulation.

Thus, when the bottom-neutral type transmission 13 is at the neutral N while the straddled vehicle 10 is stopped, non-recommendation for a shift-down manipulation is displayed. If the transmission stage is switched to the first gear, recommendation for a shift-down manipulation is displayed. This suppresses an unproductive shift-down manipulation in a case where the transmission stage is the neutral N, which is the bottommost stage of the bottom-neutral type transmission 13. In addition, in a case where the transmission stage is switched to the first gear, the rider can recognize that switching to the neutral N by a shift-down manipulation is allowed. Accordingly, a manipulation direction peculiar to the bottom-neutral type transmission 13 can be easily informed via the displaying.

While the bottom-neutral type transmission 13 is kept at the first gear, the control device 14 changes display contents on the downward direction indicator 15D in accordance with a travel state of the straddled vehicle 10.

First, when the straddled vehicle 10 is stopped, the control device 14 causes the upward direction indicator 15U to display non-recommendation for a shift-up manipulation, and also causes the downward direction indicator 15D to display recommendation for a shift-down manipulation. Then, when the straddled vehicle 10 is in starting, that is, when the clutch 12 is in the half-clutch state, the control device 14 causes the upward direction indicator 15U to display non-recommendation for a shift-up manipulation, and also causes the downward direction indicator 15D to display non-recommendation for the shift-down manipulation. Then, when the straddled vehicle 10 is in traveling, that is, when the clutch 12 is in the connected state, the control device 14 causes the upward direction indicator 15U to display recommendation for a shift-up manipulation, and also causes the downward direction indicator 15D to display non-recommendation for a shift-down manipulation.

Thus, even while the transmission stage is kept at the first gear, the status of displaying recommendation/non-recommendation for shift-up and shift-down changes in the course of the straddled vehicle 10 starting from the stopped state. Accordingly, in the straddled vehicle 10 of electric-shift type, which involves no clutch manipulation, connection of the driving force can be grasped by viewing a change of the displaying on the shift direction indicator 15.

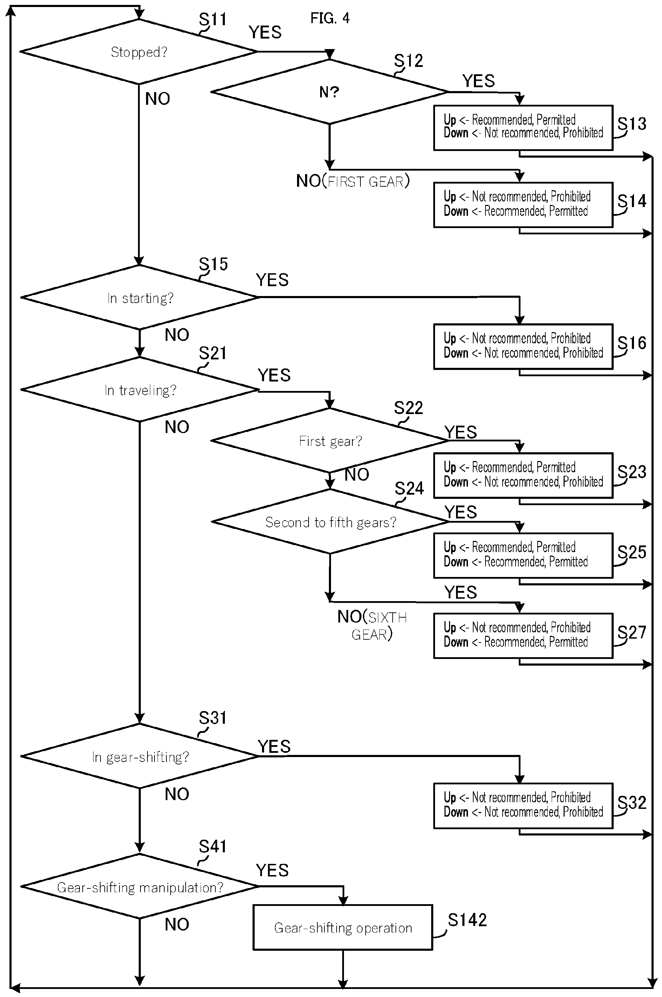

FIG. 4 is a flowchart illustrating an operation of the control device shown in FIG. 3.

The control device 14 shown in FIG. 4, as mentioned above, not only controls the displaying on the shift direction indicator 15, that is, the displaying of recommendation/non-recommendation, but also sets permission/prohibition of switching the transmission stage of the bottom-neutral type transmission 13. For example, the words "Recommended, Permitted" in FIG. 4 signify causing the indicator to display recommendation, and permitting a shift operation. The words "Not recommended, Prohibited" signify causing the indicator to display non-recommendation, and prohibiting a shift operation. For example, the words "Up <- Recommended, Permitted" signify causing the upward direction indicator 15U to display recommendation, and permitting a shift-up operation. The same applies to "Down," which represents the downward direction indicator 15D and down-shifting.

The control device 14 of this embodiment permits a shift operation, when causing the indicator to display recommendation. The control device 14 prohibits a shift operation, when causing the indicator to display non-recommendation. When recommendation is displayed on an indicator, therefore, a shift operation in a direction represented by the indicator is permitted. When non-recommendation is displayed on an indicator, a shift operation in a direction represented by the indicator is prohibited. Thus, if no operation is performed in response to a shift manipulation in any state, the reason therefore, which is prohibition of the operation, is displayed on the indicator. Accordingly, all settings about permission/prohibition of electric shifting operations can be informed via the displaying.

The control device 14 of this embodiment operates the shift actuator 13c and the clutch actuator 12c, in the gear-shifting operation (S142). As a result, the transmission stage of the bottom-neutral type transmission 13 is switched. The control device 14 operates the shift actuator 13c and the clutch actuator 12c in accordance with a permission/prohibition status for a shift operation, which has been set in accordance with the transmission stage and the travel state.

The control device 14 of this embodiment prohibits a shift operation, when causing the indicator to display non-recommendation for a shift operation.

Referring to the part (d) of FIG. 3, when the bottom-neutral type transmission 13 is at the first gear while the straddled vehicle 10 is stopped; a shift-up manipulation is not recommended. Actually, a shift-up operation is prohibited. Accordingly, when the bottom-neutral type transmission 13 is not at the neutral N while the straddled vehicle 10 is stopped (S12: No), the bottom-neutral type transmission 13 is restricted to the first gear.

When the bottom-neutral type transmission 13 is at the first gear while the straddled vehicle 10 is in traveling; a shift-down manipulation is not recommended. Actually, a shift-down operation is prohibited. That is, while the straddled vehicle 10 is in traveling, the bottom-neutral type transmission 13 is not brought to the neutral N. Accordingly, when the straddled vehicle 10 is in traveling, and the bottom-neutral type transmission 13 is neither at the first gear nor at any of the second to fifth gears (S24: No); the bottom-neutral type transmission 13 is at the sixth gear.

### [Third Embodiment]

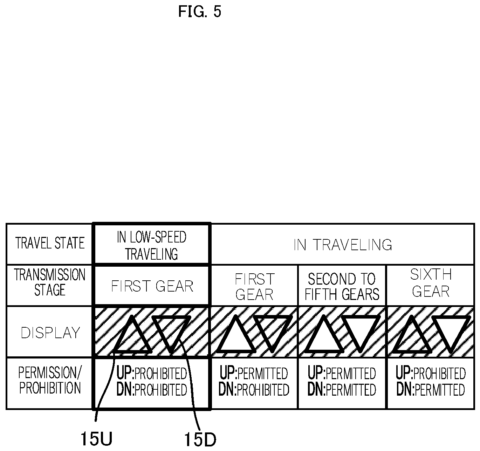

FIG. 5 is a chart showing a display mode of a shift direction indicator and a permission/prohibition status for a shift operation, in a straddled vehicle according to third embodiment of the present teaching.

The chart of FIG. 5 shows the display mode and the permission/prohibition status in cases where a straddled vehicle 10 is in low-speed traveling and where the straddled vehicle 10 is in traveling. The display mode and the permission/prohibition status in the other cases are identical to those of the second embodiment shown in FIG. 3, and therefore illustration and description thereof will be omitted.

This embodiment is different from the second embodiment in that a low-speed traveling state is provided. More specifically, this embodiment is different from the second embodiment in that the display mode and the permission/prohibition status in low-speed traveling are different from those in other traveling states.

In low-speed traveling, the straddled vehicle 10 is traveling at a speed lower than a reference speed. In traveling other than low-speed traveling, the straddled vehicle 10 is traveling at a speed higher than the reference speed. The reference speed is a speed of the straddled vehicle 10 at which the rotation speed of an output of a power source 11 becomes an idling rotation speed when a bottom-neutral type transmission 13 is at second gear. The idling rotation speed is a rotation speed that is set in advance in the straddled vehicle 10.

When the bottom-neutral type transmission 13 is at first gear while the straddled vehicle 10 is in low-speed traveling; a control device 14 causes an upward direction indicator 15U to display non-recommendation for a shift-up manipulation.

When the bottom-neutral type transmission 13 is at the first gear while the straddled vehicle 10 is in traveling; the control device 14 causes the upward direction indicator 15U to display recommendation for a shift-up manipulation.

When the bottom-neutral type transmission 13 is at the first gear; the control device 14 causes a downward direction indicator 15D to display non-recommendation for a shift-down manipulation in both cases of low-speed traveling and traveling.

This embodiment suppresses an event that the rotation speed of the power source 11 falls below the idling rotation speed as a result of a shift-up operation to the second gear performed when the speed of the straddled vehicle 10 is lower than the reference speed. If the rotation speed of the power source 11 falls below the idling rotation speed, the output of the power source 11 for acceleration is likely to decrease. Such a decrease in the output for acceleration is suppressed, which may otherwise be caused when the rotation speed of the power source 11 falls below the idling rotation speed as a result of a shift-up operation to the second gear.

When the bottom-neutral type transmission 13 is at the first gear, the downward direction indicator 15D displays non-recommendation for a shift-down manipulation, in both cases where the straddled vehicle 10 is in traveling and in low-speed traveling. This suppresses a transition to the neutral state caused by a shift-down manipulation in traveling or in low-speed traveling.

When the bottom-neutral type transmission 13 is at the first gear while the straddled vehicle 10 is in low-speed traveling, the control device 14 of this embodiment prohibits a shift-up manipulation. When the bottom-neutral type transmission 13 is at the first gear while the straddled vehicle 10 is in traveling, the control device 14 permits a shift-up manipulation. This further suppresses the event that the rotation speed of the power source 11 falls below the idling rotation speed as a result of a shift-up operation to the second gear performed when the speed of the straddled vehicle 10 is lower than the reference speed.

In both cases of low-speed traveling and traveling, the control device 14 prohibits a shift-down manipulation. This further suppresses a transition to the neutral state caused by a shift-down manipulation in traveling or in low-speed traveling.

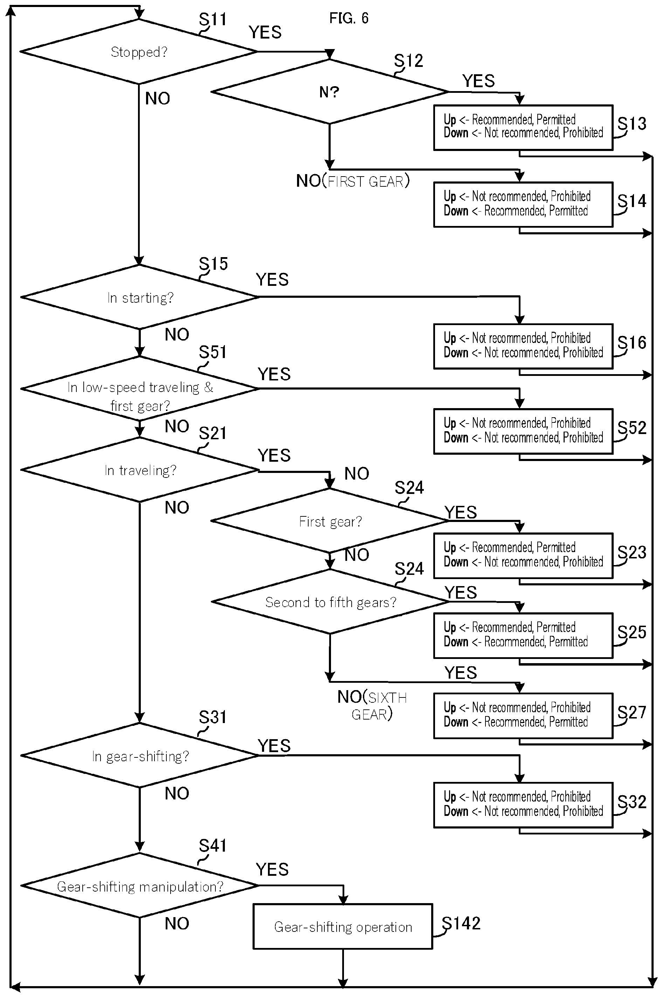

FIG. 6 is a flowchart illustrating an operation of the control device according to the third embodiment.

When the bottom-neutral type transmission 13 is at the first gear while the straddled vehicle 10 is in low-speed traveling (S51: Yes), the control device 14 of this embodiment causes the upward direction indicator 15U to display non-recommendation for a shift-up manipulation, and causes the downward direction indicator 15D to display non-recommendation for a shift-down manipulation. The control device 14 also prohibits a shift-up manipulation, and prohibits a shift-down manipulation, too.

The other parts of the process shown in FIG. 6 are identical to those of the process of the second embodiment shown in FIG. 4.

### [Fourth Embodiment]

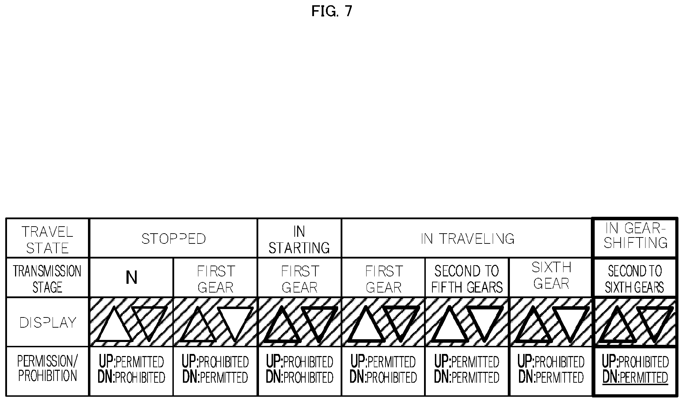

FIG. 7 is a chart showing a display mode of a shift direction indicator and a permission/prohibition status for a shift operation, in a straddled vehicle according to fourth embodiment of the present teaching.

The chart of FIG. 7 is different from the chart of the second embodiment shown in the part (d) of FIG. 3, in terms of the permission/prohibition status in gear-shifting. The other parts are identical to those of the second embodiment shown in FIG. 3, and thus illustration and description of them will be omitted, and only the different point will be described.

A control device 14 of this embodiment, in gear-shifting, prohibits a shift-up manipulation, but permits a shift-down manipulation. The control device 14, in gear-shifting, causes a downward direction indicator 15D to display non-recommendation for a shift-down manipulation, but permits a shift-down manipulation.

In this embodiment, a manipulation that is actually permitted is partially different from displaying about a manipulation.

More specifically, for a period in which the bottom-neutral type transmission 13 at any of second to sixth gears is in shift-down operation, the control device 14 causes the downward direction indicator 15D to display non-recommendation for a shift-down manipulation, but permits a shift-down manipulation. When the bottom-neutral type transmission 13 is at first gear, the control device 14 causes the downward direction indicator 15D to display non-recommendation for a shift-down manipulation, and prohibits a shift-down manipulation. That is, when the bottom-neutral type transmission 13 is at the first gear, the permission/prohibition status in gear-shifting is prohibition, like in the chart shown in the part (d) of FIG. 3.

In this embodiment, non-recommendation for a shift-up manipulation and non-recommendation for a shift-down manipulation are displayed in gear-shifting. In this state, a shift-up manipulation is prohibited, and a shift-down manipulation is permitted.

During a shift operation, another additional shift-up manipulation is prohibited, to suppress complication of the shift operation, while a shift-down manipulation is permitted. Thus, consecutive shift-down operations in a short time are allowed, for example. Accordingly, in gear-shifting, another additional shift-down operation is not recommended, but it may be possible that shift-down operations over plural stages are performed in a short time to cope with a sudden deceleration, for example. When the bottom-neutral type transmission 13 is at the first gear, however, a shift-down manipulation is prohibited, to suppress a transition of the bottom-neutral type transmission 13 to the neutral state in traveling.

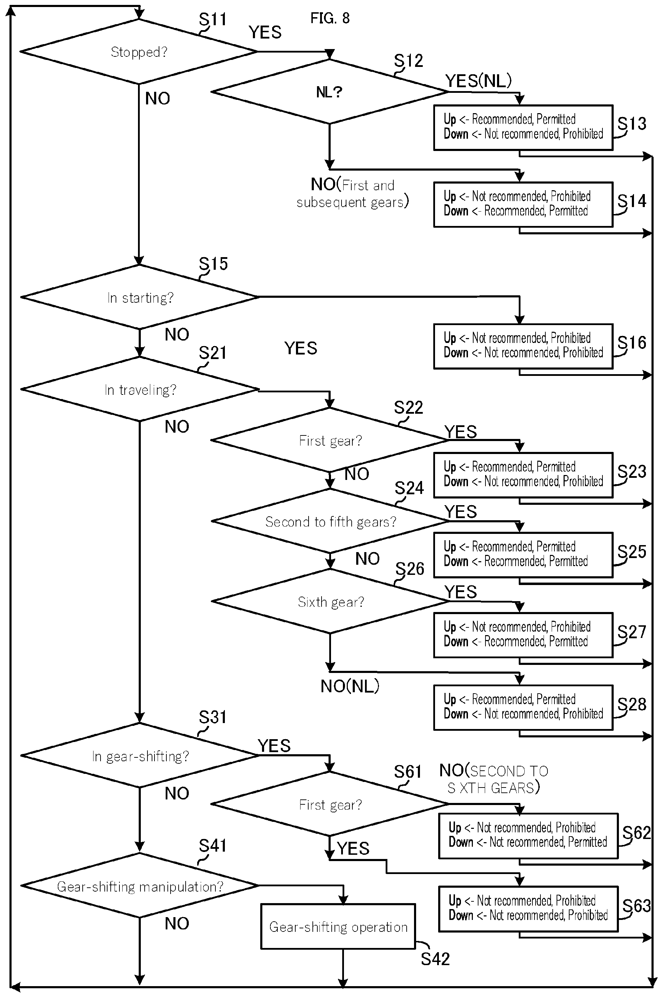

FIG. 8 is a flowchart illustrating an operation of the control device in the fourth embodiment.

In gear-shifting (S31: Yes), the control device 14 of this embodiment causes both an upward direction indicator 15U and the downward direction indicator 15D to display non-recommendation for a shift-up manipulation and non-recommendation for a shift-down manipulation, respectively. The control device 14 prohibits a shift-up manipulation, but permits a shift-down manipulation (S62).

More specifically, when, in gear-shifting (S31: Yes), the bottom-neutral type transmission 13 is at any of the second to sixth gears (S61: No), the control device 14 causes both the upward direction indicator 15U and the downward direction indicator 15D to display non-recommendation for a shift-up manipulation and non-recommendation for a shift-down manipulation, respectively. The control device 14 prohibits a shift-up manipulation, but permits a shift-down manipulation (S62). When, in gear-shifting (S31: Yes), the bottom-neutral type transmission 13 is at the first gear (S61: Yes), the control device 14 causes both the upward direction indicator 15U and the downward direction indicator 15D to display non-recommendation for a shift-up manipulation and non-recommendation for a shift-down manipulation, respectively. The control device 14 prohibits both a shift-up manipulation and a shift-down manipulation.

The other parts of the process shown in FIG. 8 are identical to those of the process of the second embodiment shown in FIG. 4.

### [Fifth Embodiment]

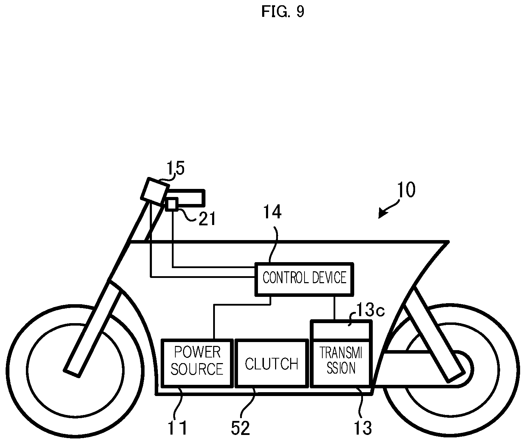

FIG. 9 is a side view showing an outline configuration of a straddled vehicle according to fifth embodiment of the present teaching.

A straddled vehicle 10 shown in FIG. 9 includes a clutch 52, which is a centrifugal clutch. The clutch 52 switchingly connects or disconnects a power transmission path in accordance with a rotation speed of an input shaft. That is, the clutch 52, which is not controlled by a control device 14, switchingly connects or disconnects the power transmission path in accordance with a rotation speed of an output of a power source 11.

When, for example, the rotation speed of the output of the power source 11 is an idling rotation speed, the clutch 52 disconnects the power transmission path. When, for example, the rotation speed of the output of the power source 11 is higher than a connection speed, the clutch 52 connects the power transmission path. The connection speed is a speed higher than the idling rotation speed.

The control device 14 does not directly control the clutch 52. In response to detecting a manipulation on a gear-shifting manipulation member 21, the control device 14 controls the output of the power source 11, to bring the clutch 52 into a disconnected state or a half-clutch state. This facilitates a gear-shifting operation of the bottom-neutral type transmission 13.

The straddled vehicle 10 of this embodiment makes it possible, with a simple structure having no clutch actuator, to complete a shift-up operation or a shift-down operation by a simple manipulation on a switch serving as the gear-shifting manipulation member 21, without any direct manipulation on the clutch 52. Thus, an event that a rider makes another unnecessary shift-up manipulation before a start is suppressed in the straddled vehicle 10 capable of performing a shift-up operation by a simple manipulation and with a simple structure. Accordingly, wear of the clutch 52 is suppressed in a vehicle capable of performing a shift-up operation by a simple manipulation.

### Reference Signs List

- 10: straddled vehicle
- 11: power source
- 12,52: clutch
- 12c: clutch actuator
- 13: bottom-neutral type transmission
- 13a, 21: gear-shifting manipulation member
- 13c: shift actuator
- 14: control device
- 15: shift direction indicator
- 15D: downward direction indicator
- 15U: upward direction indicator

## Claims

1. A straddled vehicle comprising:
a bottom-neutral type transmission (13) having plural transmission stages (N, 1 to 6) including plural in-gear stages (1 to 6) and neutral (N), the plural in-gear stages (N, 1 to 6) ranging from a low gear, which is first gear (1), to a top gear, which is the highest stage (6), the transmission stages (N, 1 to 6) being configured to be switched to increase by one gear upon one shift-up operation, and to be switched to decrease by one gear upon one shift-down operation, the transmission stages (N, 1 to 6) being configured such that the first gear (1) is switched to the neutral (N) by the shift-down operation;
a power source (11) configured to output power for driving the straddled vehicle;
a clutch (12, 52) configured to connect or disconnect a power transmission path through which power outputted from the power source (11) is supplied to the bottom-neutral type transmission (13);
a gear-shifting manipulation member (13a, 21) configured to receive a shift-up manipulation and a shift-down manipulation, the shift-up manipulation being associated with the shift-up operation in the bottom-neutral type transmission (13), and the shift-down manipulation being associated with the shift-down operation in the bottom-neutral type transmission (13);
a shift direction indicator (15) configured to display a recommended direction of a shift manipulation, the shift direction indicator (15) including both an upward direction indicator (15U) and a downward direction indicator (15D), the upward direction indicator (15U) being configured to display recommendation or non-recommendation for the shift-up manipulation on the gear-shifting manipulation member (13a, 21), the downward direction indicator (15D) being configured to display recommendation or non-recommendation for the shift-down manipulation on the gear-shifting manipulation member (13a, 21); and
a control device (14) configured to
cause the upward direction indicator (15U) to display recommendation for the shift-up manipulation when a transmission stage of the bottom-neutral type transmission (13) is the neutral (N), which is the bottommost stage, while traveling of the straddled vehicle is stopped, and
cause the upward direction indicator (15U) to display non-recommendation for the shift-up manipulation when the transmission stage of the bottom-neutral type transmission (13) is the first gear while traveling of the straddled vehicle is stopped.

2. The straddled vehicle according to claim 1, wherein
the bottom-neutral type transmission (13) includes a shift actuator (13c) configured to electrically switch the transmission stage, and
the control device (14) is configured to operate the shift actuator (13c) in accordance with the shift-up manipulation or the shift-down manipulation on the gear-shifting manipulation member (13a, 21).

3. The straddled vehicle according to claim 2, wherein
when the transmission stage of the bottom-neutral type transmission (13) is switched from the neutral (N), which is the bottommost stage, to the first gear in response to the shift-up manipulation received by the gear-shifting manipulation member (13a, 21) while traveling of the straddled vehicle is stopped, the control device (14) is configured to cause the upward direction indicator (15U) to display non-recommendation for the shift-up manipulation, which is a manipulation in the same direction as a direction of the previous manipulation, and to prohibit the shift actuator (13c) from operating in accordance with the shift-up manipulation on the gear-shifting manipulation member (13a, 21).

4. The straddled vehicle according to any one of claims 1 to 3, wherein
when the transmission stage of the bottom-neutral type transmission (13) is the neutral (N), which is the bottommost stage, while traveling of the straddled vehicle is stopped, the control device (14) is configured to cause the downward direction indicator (15D) to display non-recommendation for the shift-down manipulation, and
when the transmission stage of the bottom-neutral type transmission (13) is switched from the neutral (N), which is the bottommost stage, to the first gear in response to the shift-up manipulation received by the gear-shifting manipulation member (13a, 21) while traveling of the straddled vehicle is stopped, the control device (14) is configured to cause the downward direction indicator (15D) to display recommendation for the shift-down manipulation.

5. The straddled vehicle according to any one of claims 1 to 4, wherein
when the transmission stage of the bottom-neutral type transmission (13) is the first gear while traveling of the straddled vehicle is stopped, the control device (14) is configured to cause the upward direction indicator (15U) to display non-recommendation for the shift-up manipulation, and to cause the downward direction indicator (15D) to display recommendation for the shift-down manipulation,
when the transmission stage of the bottom-neutral type transmission (13) is the first gear while the clutch (12, 52) is in a half-clutch state, which is a state between a connected state and a disconnected state, the control device (14) is configured to cause the upward direction indicator (15U) to display non-recommendation for the shift-up manipulation, and to cause the downward direction indicator (15D) to display non-recommendation for the shift-down manipulation, and
when the transmission stage of the bottom-neutral type transmission (13) is the first gear while the clutch (12, 52) is in the connected state, the control device (14) is configured to cause the upward direction indicator (15U) to display recommendation for the shift-up manipulation, and to cause the downward direction indicator (15D) to display non-recommendation for the shift-down manipulation.

6. The straddled vehicle according to any one of claims 1 to 5, wherein
when the transmission stage of the bottom-neutral type transmission (13) is the first gear while the straddled vehicle is traveling,
if a traveling speed of the straddled vehicle is higher than a reference speed, the control device (14) is configured to cause the upward direction indicator (15U) to display recommendation for the shift-up manipulation,
if the traveling speed of the straddled vehicle is lower than the reference speed, the control device (14) is configured to cause the upward direction indicator (15U) to display non-recommendation for the shift-up manipulation, and
irrespective of a rotation speed of an output of the power source (11), the control device (14) is configured to cause the downward direction indicator (15D) to display non-recommendation for the shift-down manipulation,
the reference speed is a traveling speed of the straddled vehicle at which the rotation speed of the output of the power source (11) becomes an idling rotation speed when the bottom-neutral type transmission (13) is at second gear.

7. The straddled vehicle according to any one of claims 2 to 6, wherein
when the clutch (12, 52) is in the half-clutch state, the control device (14) is configured to cause the upward direction indicator (15U) to display non-recommendation for the shift-up manipulation, and to cause the downward direction indicator (15D) to display non-recommendation for the shift-down manipulation, and
the control device (14) is configured to prohibit the shift actuator (13c) from operating in accordance with the shift-up manipulation on the gear-shifting manipulation member (13a, 21), and to permit the shift actuator (13c) to operate in accordance with the shift-down manipulation on the gear-shifting manipulation member (13a, 21).

8. The straddled vehicle according to any one of claims 1 to 7, wherein
the clutch (12, 52) includes a clutch actuator (12c) configured to electrically connect or disconnect the transmission path.

9. The straddled vehicle according to any one of claims 1 to 8, wherein
the clutch (12, 52) is a centrifugal clutch configured to connect or disconnect the transmission path in accordance with a rotation speed of an output of the power source (11).
